# EUROPÄISCHE PATENTSCHRIFT

(11) **EP 3 816 169 B1**
(45) Veröffentlichungstag und Bekanntmachung des Hinweises auf die Patenterteilung: **01.12.2021**
(21) Anmeldenummer: 19205659.6
(22) Anmeldetag: 28.10.2019
(51) Int. Cl.: C07F 7/30

(54) **VERFAHREN ZUR HERSTELLUNG VON ACYLGERMANIUM-VERBINDUNGEN**
METHOD FOR PRODUCING ACYL-GERMANIUM DERIVATIVES
PROCÉDÉ DE FABRICATION DE COMPOSÉS D'ACYL-GERMANIUM

(43) Veröffentlichungstag der Anmeldung: 05.05.2021
(73) Patentinhaber: Evonik Operations GmbH, 45128 Essen (DE)
(72) Erfinder: WU, Xiao-Feng, 18059 Rostock (DE); YUAN, Yang, 18059 Rostock (DE); BÖRNER, Armin, 18059 Rostock (DE); FRANKE, Robert, 45772 Marl (DE)
(74) Vertreter: Evonik Patent Association

(56) Entgegenhaltungen:
- EP-A1- 1 905 415
- FRISCHHUT ET AL.: "Acylation of Homoatomic Ge9 Cages and Subsequent Decarbonylation", CHEMISTRY - A EUROPEAN JOURNAL, Bd. 24, 2018, Seiten 9009-9014, XP002796817,
- YAMAMOTO ET AL.: "Preparation of Substituted Benzoyltrimethylsilanes and -germanes by the Reaction of Benzoyl Chlorides with Hexamethyldisilane or -digermane in the presence of Palladium as Catalysts", ORGANOMETALLICS, Bd. 6, 1987, Seiten 974-979, XP002796818,

## Beschreibung

Die Erfindung betrifft ein Verfahren zur Herstellung von Acylgermanium-Verbindungen.

Acylgermanium-Verbindungen finden beispielsweise als Polymerisationsinitiator in polymerisierbare Zusammensetzungen Anwendung. Bei den polymerisierbaren Zusammensetzungen kann es sich zum Beispiel um Zemente, Dentalwerkstoffe oder UVhärtendes Beschichtungsmaterial handeln.

In EP1905415 (A1) werden unterschiedliche Acylgermanium-Verbindungen, deren Verwendungsmöglichkeiten, sowie Verfahren zu ihrer Herstellung beschrieben.

In Yamamoto, K.; Hayashi, A.; Suzuki, S.; Tsuji J.; Organometallics; 1987, 6, 974-979 wird die Acylgermanium-Verbindung durch Umsetzung von Hexaalkyldigermanium mit Säurechlorid hergestellt.

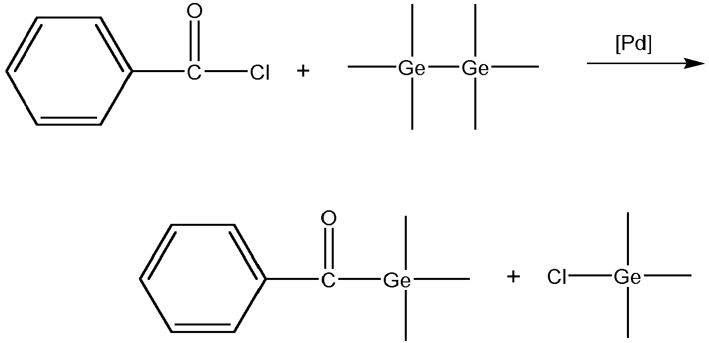

Im Zusammenhang mit der entsprechenden Siliziumverbindung (Me₃SiSiMe₃) wurden als Katalysator Palladium-Komplexe mit unterschiedlichen Liganden getestet.

Der Ausgangsstoff Benzoylchlorid ist eine an feuchter Luft rauchende, tränenreizende Flüssigkeit. Die Dämpfe reizen die Atemwege und die Augen.

Die technische Aufgabe der Erfindung ist die Bereitstellung eines neuen Verfahrens, welches die in Zusammenhang mit dem Stand der Technik diskutierten Nachteile nicht aufweist.

Die Aufgabe wird gelöst durch eine Verfahren gemäß Anspruch 1.

Verfahren zur Herstellung von Acylgermanium-Verbindungen umfassend die Verfahrensschritte:
a) Zusammenführen einer Verbindung gemäß der Struktur (**I**): 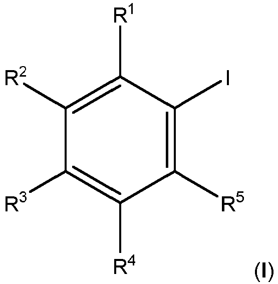 wobei R¹, R², R³, R⁴, R⁵ ausgewählt sind aus: -H, -(C₁-C₁₂)-Alkyl, -O-(C₁-C₁₂)-Alkyl, -O-CH₂-CH=CH₂, -(C₆-C₂₀)-Aryl, -O-(C₆-C₂₀)-Aryl, -(C₆-C₂₀)-Heteroaryl, -OH, -S-(C₁-C₁₂)-Alkyl, -NO₂, -NH₂, - N[(C₁-C₁₂)-Alkyl]₂, -X,
   mit X: 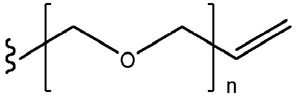 und n für ein Zahl von 1 bis 5 steht;
   mit einer Verbindung gemäß der Struktur (**II**): 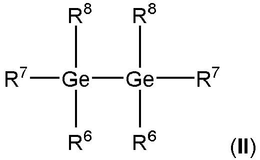 wobei R⁶, R⁷, R⁸ ausgewählt sind aus: -(C₁-C₁₂)-Alkyl, -CH=CH₂, -CH₂-CH=CH₂, -(C₆-C₂₀)-Aryl, - (C₆-C₂₀)-Heteroaryl,
   zu einem Gemisch;
b) Zugabe einer Verbindung, welche Pd umfasst zu dem Gemisch;
c) Zugabe eines Liganden zu dem Gemisch, welcher die Struktur (**III**) aufweist: 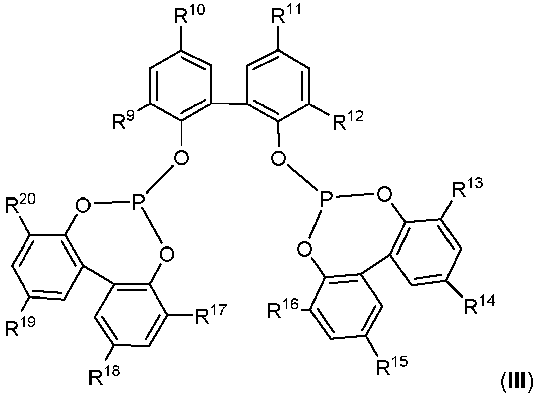 wobei R⁹, R¹⁰, R¹¹, R¹², R¹³, R¹⁴, R¹⁵, R¹⁶, R¹⁷, R¹⁸, R¹⁹, R²⁰ ausgewählt sind aus: -H, -(C1-C12)-Alkyl, -O-(C₁-C₁₂)-Alkyl, -(C₆-C₂₀)-Aryl, -O-(C₆-C₂₀)-Aryl, Halogen, -NO₂, -NH₂, -N[(C₁-C₁₂)-Alkyl]₂;
d) Zuführen von CO zu dem Gemisch;
e) Erhitzen des Gemisches, wobei die Edukte zu einer Verbindung gemäß der Struktur (**IV**) umgesetzt werden:

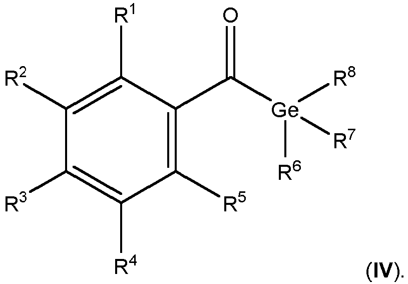

Das im erfindungsgemäßen Verfahren als Edukt eingesetzte lodbenzol weist die in Zusammenhang mit dem Stand der Technik diskutierten aus dem dort verwendeten Säurechlorid auftretenden Nachteile nicht auf.

In einer Variante des Verfahrens sind R¹, R², R³, R⁴, R⁵ ausgewählt aus: -H, -(C₁-C₁₂)-Alkyl, -O-(C₁-C₁₂)-Alkyl, -O-CH₂-CH=CH₂, -(C₆-C₂₀)-Aryl, -O-(C₆-C₂₀)-Aryl, -S-(C₁-C₁₂)-Alkyl, -NO₂, -NH₂, -N[(C₁-C₁₂)-Alkyl]₂, -X, mit X: 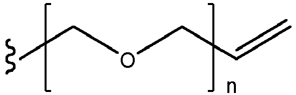 und n für ein Zahl von 1 bis 5 steht.

In einer Variante des Verfahrens sind R¹, R², R³, R⁴, R⁵ ausgewählt aus: -H, -(C₁-C₁₂)-Alkyl, -O-(C₁-C₁₂)-Alkyl, -O-CH₂-CH=CH₂, -S-(C₁-C₁₂)-Alkyl, -N[(C₁-C₁₂)-Alkyl]₂, -X, mit X: 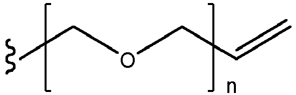 und n für ein Zahl von 1 bis 3 steht.

In einer Variante des Verfahrens sind R⁶, R⁷, R⁸ ausgewählt aus: -(C₁-C₁₂)-Alkyl, -CH=CH₂, -CH₂-CH=CH₂, -(C₆-C₂₀)-Aryl, -(C₆-C₂₀)-Heteroaryl.

In einer Variante des Verfahrens sind R⁶, R⁷, R⁸ ausgewählt aus: -(C₁-C₁₂)-Alkyl, -CH=CH₂, -CH₂-CH=CH₂.

In einer Variante des Verfahrens stehen R⁶, R⁷, R⁸ für: -(C₁-C₁₂)-Alkyl.

In einer Variante des Verfahrens steht mindestens einer der Reste R⁹, R¹⁰, R¹¹, R¹², R¹³, R¹⁴, R¹⁵, R¹⁶, R¹⁷, R¹⁸, R¹⁹, R²⁰ nicht für -H.

In einer Variante des Verfahrens sind R⁹, R¹⁰, R¹¹, R¹², R¹³, R¹⁴, R¹⁵, R¹⁶, R¹⁷, R¹⁸, R¹⁹, R²⁰ ausgewählt aus: -H, -(C₁-C₁₂)-Alkyl, -O-(C₁-C₁₂)-Alkyl.

In einer Variante des Verfahrens weist der Ligand die folgende Struktur (2) auf:

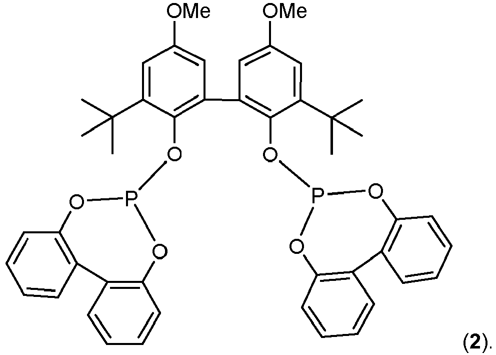

In einer Variante des Verfahrens ist die Verbindung in Verfahrensschritt b) ausgewählt aus: PdCl₂, PdBr₂, Pd(OAc)₂, Pd(dba)₂, PdCl₂(CH₃CN)₂.

In einer Variante des Verfahrens erfolgt die Umsetzung unter einem CO-Druck im Bereich von 1 bis 40 bar.

In einer Variante des Verfahrens erfolgt die Umsetzung unter einem CO-Druck im Bereich von 10 bis 30 bar.

In einer Variante des Verfahrens wird das Gemisch im Verfahrensschritt e) auf eine Temperatur im Bereich von 50 bis 140 °C erhitzt.

In einer Variante des Verfahrens wird das Gemisch im Verfahrensschritt e) auf eine Temperatur im Bereich von 70 bis 120 °C erhitzt.

In einer Variante des Verfahrens umfasst dieses den zusätzlichen Verfahrensschritt f):
f) Zugabe eines Lösungsmittels zu dem Gemisch.

In einer Variante des Verfahrens ist das Lösungsmittel ausgewählt aus:
CH₃CN, DMSO, DMF, *tert*-BuOH, Toluol.

Im Folgenden soll die Erfindung anhand eines Ausführungsbeispiels näher erläutert werden.

### Synthese Benzoyltrimethylgermanium (1)

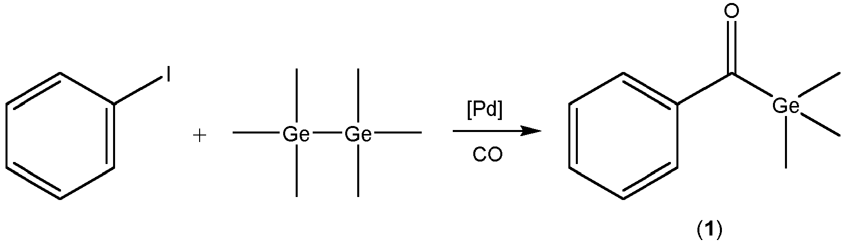

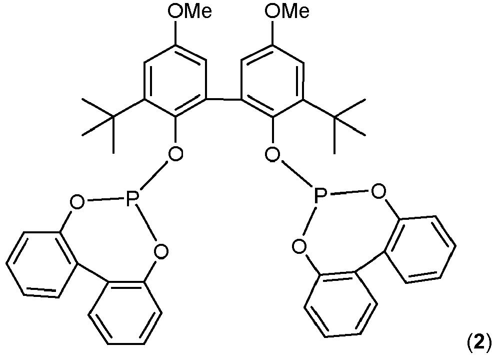

Ein 4-mL-Vial wurde mit Pd(OAc)₂ (0,01 mmol, 2,24 mg, 0,05 äq), Ligand (**2**) (0,012 mmol, 9,44 mg, 0,06 äq), Jodbenzol (0,2 mmol, 40,8 mg, 1,0 äq), Hexamethyldigermium (0,22 mmol, 51,8 mg, 1,1 äq) und einem Rührstab beschickt. Dann wird das Vial mit Septum verschlossen. Anschließend wird das Vial mit einer Nadel mit der Atmosphäre verbunden. Das Vial wird dreimal evakuiert und mit Argon wieder befüllt. Mit einer Spritze wurde Toluol (2,0 mL) in das Vial gegeben. Das Vial wurde in eine Legierungsplatte gestellt, die in einen Autoklaven (300 mL) der Reihe 4560 von Parr Instruments gelegt wurde. Nach dreimaligem Spülen des Autoklavens mit CO wurde der CO-Druck auf 20 bar bei Raumtemperatur erhöht. Die Reaktion wurde 12 h bei 110 °C durchgeführt. Nach Beendigung der Reaktion wurde der Autoklav auf Raumtemperatur abgekühlt und vorsichtig entspannt. Das Produkt wurde mit Säulenchromatographie aufgereinigt. Ausbeute: 18,7 mg, 42%
¹H NMR (300 MHz, CDCl₃) δ 7.80 (dd, *J* = 8.1, 1.6 Hz, 2H), 7.58 - 7.39 (m, 3H), 0.51 (s, 9H). ¹³C NMR (75 MHz, CDCl₃) δ 235.47, 141.77, 134.01, 129.88, 128.83, -0.00.

Das im erfindungsgemäßen Verfahren als Edukt eingesetzte Iodbenzol weist die in Zusammenhang mit dem Stand der Technik diskutierten aus dem dort verwendeten Säurechlorid auftretenden Nachteile nicht auf.

Somit wird die Aufgabe durch das erfindungsgemäße Verfahren gelöst.

## Patentansprüche

1. Verfahren zur Herstellung von Acylgermanium-Verbindungen umfassend die Verfahrensschritte:
a) Zusammenführen einer Verbindung gemäß der Struktur (**I**): 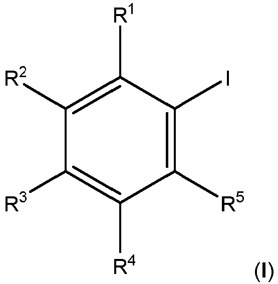 wobei R¹, R², R³, R⁴, R⁵ ausgewählt sind aus: -H, -(C₁-C₁₂)-Alkyl, -O-(C₁-C₁₂)-Alkyl, -O-CH₂-CH=CH₂, -(C₆-C₂₀)-Aryl, -O-(C₆-C₂₀)-Aryl, -(C₆-C₂₀)-Heteroaryl, -OH, -S-(C₁-C₁₂)-Alkyl, -NO₂, -NH₂, - N[(C₁-C₁₂)-Alkyl]₂, -X,
mit X: 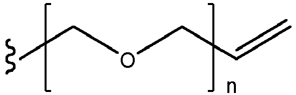 und n für ein Zahl von 1 bis 5 steht;
mit einer Verbindung gemäß der Struktur (**II**): 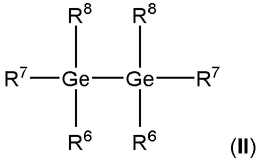 wobei R⁶, R⁷, R⁸ ausgewählt sind aus: -(C₁-C₁₂)-Alkyl, -CH=CH₂, -CH₂-CH=CH₂, -(C₆-C₂₀)-Aryl, - (C₆-C₂₀)-Heteroaryl,
zu einem Gemisch;
b) Zugabe einer Verbindung, welche Pd umfasst zu dem Gemisch;
c) Zugabe eines Liganden zu dem Gemisch, welcher die Struktur (**III**) aufweist: 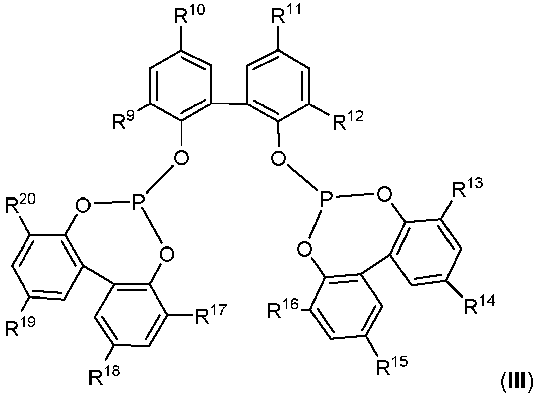 wobei R⁹, R¹⁰, R¹¹, R¹², R¹³, R¹⁴, R¹⁵, R¹⁶, R¹⁷, R¹⁸, R¹⁹, R²⁰ ausgewählt sind aus: -H, -(C1-C12)-Alkyl, -O-(C₁-C₁₂)-Alkyl, -(C₆-C₂₀)-Aryl, -O-(C₆-C₂₀)-Aryl, Halogen, -NO₂, -NH₂, -N[(C₁-C₁₂)-Alkyl]₂;
d) Zuführen von CO zu dem Gemisch;
e) Erhitzen des Gemisches, wobei die Edukte zu einer Verbindung gemäß der Struktur (**IV**) umgesetzt werden:

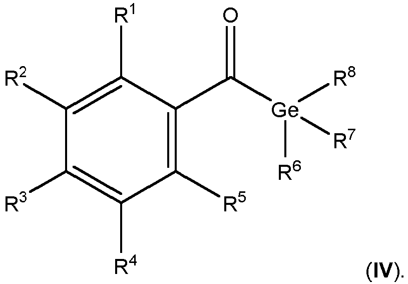

2. Verfahren nach Anspruch 1,
wobei R¹, R², R³, R⁴, R⁵ ausgewählt sind aus: -H, -(C₁-C₁₂)-Alkyl, -O-(C₁-C₁₂)-Alkyl, -O-CH₂-CH=CH₂, -(C₆-C₂₀)-Aryl, -O-(C₆-C₂₀)-Aryl, -S-(C₁-C₁₂)-Alkyl, -NO₂, -NH₂, -N[(C₁-C₁₂)-Alkyl]₂, -X,
mit X: 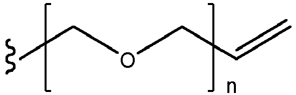 und n für ein Zahl von 1 bis 5 steht.

3. Verfahren nach einem der Ansprüche 1 bis 2,
wobei R¹, R², R³, R⁴, R⁵ ausgewählt sind aus: -H, -(C₁-C₁₂)-Alkyl, -O-(C₁-C₁₂)-Alkyl, -O-CH₂-CH=CH₂, -S-(C₁-C₁₂)-Alkyl, -N[(C₁-C₁₂)-Alkyl]₂, -X,
mit X: 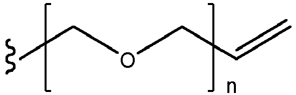 und n für ein Zahl von 1 bis 3 steht.

4. Verfahren nach einem der Ansprüche 1 bis 3,
wobei R⁶, R⁷, R⁸ ausgewählt sind aus: -(C₁-C₁₂)-Alkyl, -CH=CH₂, -CH₂-CH=CH₂, -(C₆-C₂₀)-Aryl, - (C₆-C₂₀)-Heteroaryl.

5. Verfahren nach einem der Ansprüche 1 bis 4,
wobei R⁶, R⁷, R⁸ ausgewählt sind aus: -(C₁-C₁₂)-Alkyl, -CH=CH₂, -CH₂-CH=CH₂.

6. Verfahren nach einem der Ansprüche 1 bis 5,
wobei mindestens einer der Reste R⁹, R¹⁰, R¹¹, R¹², R¹³, R¹⁴, R¹⁵, R¹⁶, R¹⁷, R¹⁸, R¹⁹, R²⁰ nicht für-H steht.

7. Verfahren nach einem der Ansprüche 1 bis 6,
wobei R⁹, R¹⁰, R¹¹, R¹², R¹³, R¹⁴, R¹⁵, R¹⁶, R¹⁷, R¹⁸, R¹⁹, R²⁰ ausgewählt sind aus: -H, -(C₁-C₁₂)-Alkyl, -O-(C₁-C₁₂)-Alkyl.

8. Verfahren nach einem der Ansprüche 1 bis 7,
wobei der Ligand die folgende Struktur (**2**) aufweist:

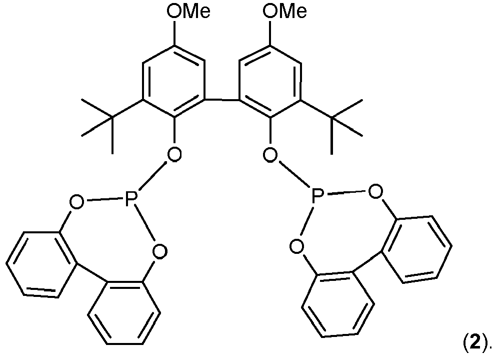

9. Verfahren nach einem der Ansprüche 1 bis 8,
wobei die Verbindung aus Verfahrensschritt b) ausgewählt ist aus:
PdC₂, PdBr₂, Pd(OAc)₂, Pd(dba)₂, PdCl₂(CH₃CN)₂.

10. Verfahren nach einem der Ansprüche 1 bis 9,
wobei die Umsetzung unter einem CO-Druck im Bereich von 1 bis 40 bar erfolgt.

11. Verfahren nach einem der Ansprüche 1 bis 10,
wobei das Gemisch im Verfahrensschritt e) auf eine Temperatur im Bereich von 50 bis 140 °C erhitzt wird.

12. Verfahren nach einem der Ansprüche 1 bis 11,
umfassend den zusätzlichen Verfahrensschritt f):
f) Zugabe eines Lösungsmittels zu dem Gemisch.

13. Verfahren nach Anspruch 12,
wobei das Lösungsmittel ausgewählt ist aus:
CH₃CN, DMSO, DMF, tert-BuOH, Toluol.

## Claims

1. Process for preparing acylgermanium compounds, comprising the process steps of:
a) combining a compound of structure (**I**): 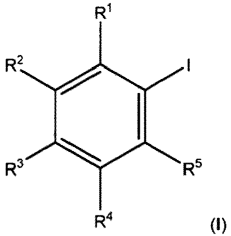 wherein R¹, R², R³, R⁴, R⁵ are selected from: -H, -(C₁-C₁₂) - alkyl, -O- (C₁-C₁₂) -alkyl, -O-CH₂-CH=CH₂, -(C₆-C₂₀)-aryl, - O-(C₆-C₂₀)-aryl, -(C₆-C₂₀)-heteroaryl, -OH, -S-(C₁-C₁₂)-alkyl, -NO₂, -NH₂, -N[(C₁-C₁₂)-alkyl]₂, -X,
where X is: 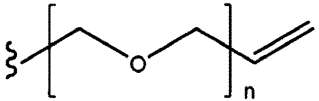 and n is a number from 1 to 5; with a compound of structure (**II**): 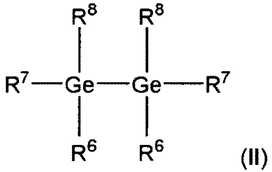 wherein R⁶, R⁷, R⁸ are selected from: -(C₁-C₁₂)-alkyl, - CH=CH₂, CH₂-CH=CH₂, -(C₆-C₂₀)-aryl, -(C₆-C₂₀)-heteroaryl,
to form a mixture;
b) adding a compound comprising Pd to the mixture;
c) adding to the mixture a ligand having the structure (**III**) : 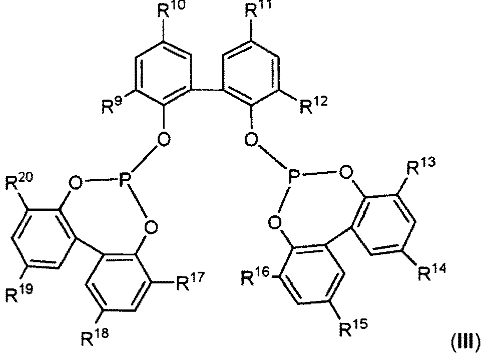 wherein R⁹, R¹⁰, R¹¹, R¹², R¹³, R¹⁴, R¹⁵, R¹⁶, R¹⁷, R¹⁸, R¹⁹, R²⁰ are selected from -H, -(C₁-C₁₂)-alkyl, -O-(C₁-C₁₂)-alkyl, -(C₆-C₂₀)-aryl, -O-(C₆-C₂₀)-aryl, halogen, -NO₂, - NH₂, -N[(C₁-C₁₂)-alkyl]₂;
d) introducing CO into the mixture;
e) heating the mixture, with the reactants reacting to give a compound of structure (**IV**):

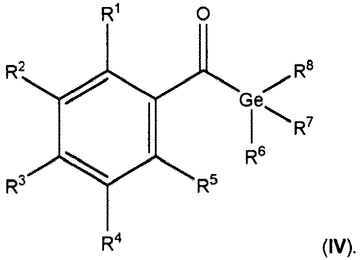

2. Process according to Claim 1,
wherein R¹, R², R³, R⁴, R⁵ are selected from: -H, -(C₁-C₁₂) -alkyl, -O-(C₁-C₁₂) -alkyl, -O-CH₂-CH=CH₂, -(C₆-C₂₀)-aryl, -O-(C₆-C₂₀)-aryl, -S-(C₁-C₁₂)-alkyl, -NO₂, -NH₂, - N[(C₁-C₁₂)-alkyl]₂, -X,
where X is: 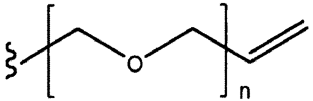 and n is a number from 1 to 5.

3. Process according to either of Claims 1 and 2, wherein R¹, R², R³, R⁴, R⁵ are selected from: -H, -(C₁-C₁₂) -alkyl, -O-(C₁-C₁₂) -alkyl, -O-CH₂-CH=CH₂, -S-(C₁-C₁₂) - alkyl, -N[(C₁-C₁₂)-alkyl]₂, -X,
where X is: 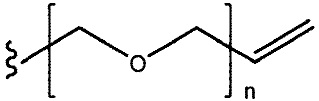 and n is a number from 1 to 3.

4. Process according to any of Claims 1 to 3,
wherein R⁶, R⁷, R⁸ are selected from: -(C₁-C₁₂)-alkyl, - CH=CH₂, CH₂-CH=CH₂, -(C₆-C₂₀)-aryl, -(C₆-C₂₀)-heteroaryl.

5. Process according to any of Claims 1 to 4,
wherein R⁶, R⁷, R⁸ are selected from: -(C₁-C₁₂)-alkyl,-CH=CH₂, CH₂-CH=CH₂.

6. Process according to any of Claims 1 to 5,
wherein at least one of the radicals R⁹, R¹⁰, R¹¹, R¹², R¹³, R¹⁴, R¹⁵, R¹⁶, R¹⁷, R¹⁸, R¹⁹, R²⁰ is not -H.

7. Process according to at least one of Claims 1 to 6, wherein R⁹, R¹⁰, R¹¹, R¹², R¹³, R¹⁴, R¹⁵, R¹⁶, R¹⁷, R¹⁸, R¹⁹, R²⁰ are selected from -H, -(C₁-C₁₂) -alkyl, -O-(C₁-C₁₂)-alkyl.

8. Process according to any of Claims 1 to 7,
wherein the ligand has the following structure (**2**):

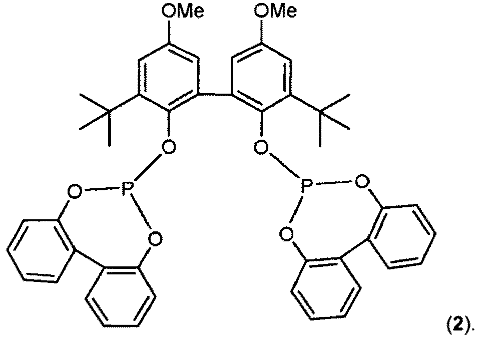

9. Process according to any of Claims 1 to 8,
wherein the compound of process step b) is selected from:
PdCl₂, PdBr₂, Pd(OAc)₂, Pd(dba)₂, PdCl₂(CH₃CN)₂.

10. Process according to any of Claims 1 to 9,
wherein the reaction is effected under a CO pressure in the range from 1 to 40 bar.

11. Process according to any of Claims 1 to 10,
wherein the mixture in process step e) is heated to a temperature in the range from 50 to 140°C.

12. Process according to any of Claims 1 to 11, comprising the additional process step f):
f) adding a solvent to the mixture.

13. Process according to Claim 12,
wherein the solvent is selected from:
CH₃CN, DMSO, DMF, *tert*-BuOH, toluene.

## Revendications

1. Procédé de préparation de composés d'acylgermanium comprenant les étapes suivantes :
a) réunion d'un composé de structure (**I**) : 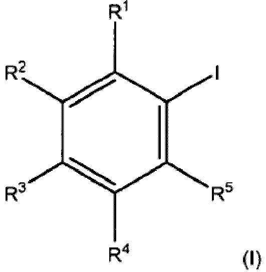 dans laquelle R¹, R², R³, R⁴, R⁵ sont choisis parmi : -H, -alkyle en C₁-C₁₂, -O-alkyle en C₁-C₁₂, -O-CH₂-CH=CH₂, -aryle en C₆-C₂₀, -O-aryle en C₆-C₂₀, -hétéroaryle en C₆-C₂₀, -OH, -S-alkyle en C₁-C₁₂, -NO₂, -NH₂, -N[alkyle en C₁-C₁₂]₂, -X,
X représentant 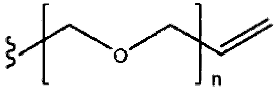 et n représentant un nombre de 1 à 5 ; à un composé de structure (**II**) : 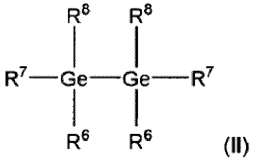 dans laquelle R⁶, R⁷, R⁸ sont choisis parmi : -alkyle en C₁-C₁₂, -CH=CH₂, -CH₂-CH=CH₂, -aryle en C₆-C₂₀, -hétéroaryle en C₆-C₂₀,
pour obtenir un mélange ;
b) addition au mélange d'un composé qui comprend du Pd ;
c) addition au mélange d'un ligand ayant la structure (**III**) : 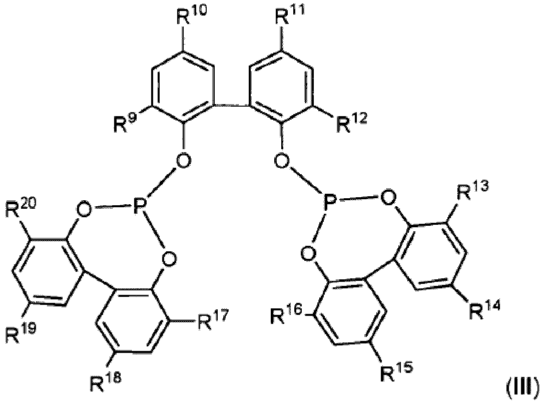 dans laquelle R⁹, R¹⁰, R¹¹, R¹², R¹³, R¹⁴, R¹⁵, R¹⁶, R¹⁷, R¹⁸, R¹⁹, R²⁰ sont choisis parmi : -H, -alkyle en C₁-C₁₂, -O-alkyle en C₁-C₁₂, -aryle en C₆-C₂₀, -O-aryle en C₆-C₂₀, halogéno, -NO₂, -NH₂, -N[alkyle en C₁-C₁₂]₂ ;
d) amenée de CO au mélange ;
e) chauffage du mélange, les réactifs étant mis à réagir pour obtenir un composé de structure (**IV**) :

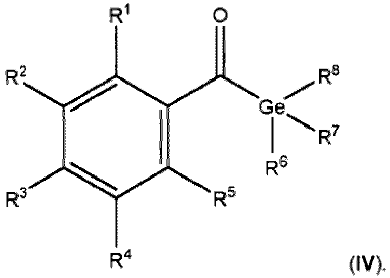

2. Procédé selon la revendication 1,
dans lequel R¹, R², R³, R⁴, R⁵ sont choisis parmi : -H, -alkyle en C₁-C₁₂, -O-alkyle en C₁-C₁₂, -O-CH₂-CH=CH₂, -aryle en C₆-C₂₀, -O-aryle en C₆-C₂₀, -S-alkyle en C₁-C₁₂, -NO₂, -NH₂, -N[alkyle en C₁-C₁₂]₂, -X,
X représentant 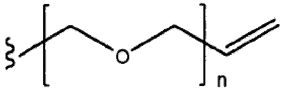 et n représentant un nombre de 1 à 5.

3. Procédé selon l'une des revendications 1 à 2,
dans lequel R¹, R², R³, R⁴, R⁵ sont choisis parmi : -H, -alkyle en C₁-C₁₂, -O-alkyle en C₁-C₁₂, -O-CH₂-CH=CH₂, -S-alkyle en C₁-C₁₂, -N[alkyle en C₁-C₁₂]₂, -X,
X représentant 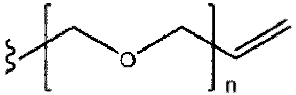 et n représentant un nombre de 1 à 3.

4. Procédé selon l'une des revendications 1 à 3, dans lequel R⁶, R⁷, R⁸ sont choisis parmi : -alkyle en C₁-C₁₂, -CH=CH₂, -CH₂-CH=CH₂, -aryle en C₆-C₂₀, -hétéroaryle en C₆-C₂₀.

5. Procédé selon l'une des revendications 1 à 4,
dans lequel R⁶, R⁷, R⁸ sont choisis parmi : -alkyle en C₁-C₁₂, -CH=CH₂, -CH₂-CH=CH₂.

6. Procédé selon l'une des revendications 1 à 5,
dans lequel au moins l'un des radicaux R⁹, R¹⁰, R¹¹, R¹², R¹³, R¹⁴, R¹⁵, R¹⁶, R¹⁷, R¹⁸, R¹⁹, R²⁰ ne représente pas -H.

7. Procédé selon l'une des revendications 1 à 6,
dans lequel R⁹, R¹⁰, R¹¹, R¹², R¹³, R¹⁴, R¹⁵, R¹⁶, R¹⁷, R¹⁸, R¹⁹, R²⁰ sont choisis parmi : -H, -alkyle en C₁-C₁₂, -O-alkyle en C₁-C₁₂.

8. Procédé selon l'une des revendications 1 à 7, le ligand présentant la structure (**2**) ci-après :

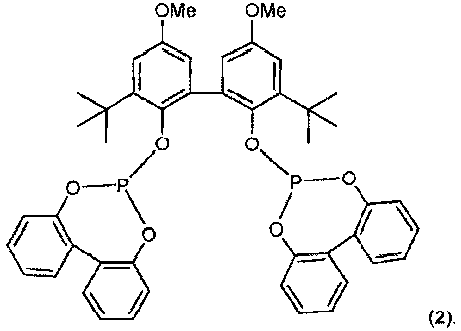

9. Procédé selon l'une des revendications 1 à 8,
dans lequel le composé de l'étape b) est choisi parmi :
PdCl₂, PdBr₂, Pd(OAc)₂, Pd(dba)₂, PdCl₂ (CH₃CN)₂.

10. Procédé selon l'une des revendications 1 à 9,
dans lequel la réaction est mise en œuvre sous une pression de CO comprise dans la plage de 1 à 40 bar.

11. Procédé selon l'une des revendications 1 à 10, dans lequel le mélange de l'étape e) est chauffé à une température comprise dans la plage de 50 à 140 °C.

12. Procédé selon l'une des revendications 1 à 11, comprenant l'étape supplémentaire f) :
f) addition d'un solvant au mélange.

13. Procédé selon la revendication 12,
dans lequel le solvant est choisi parmi : CH₃CN, DMSO, DMF, tert-BuOH, toluène.
